# DEMANDE DE BREVET EUROPEEN

(11) **EP 2 466 784 A1**
(43) Date de publication de la demande: **20.06.2012**
(21) Numéro de dépôt: 11193113.5
(22) Date de dépôt: 12.12.2011
(51) Int. Cl.: H04L 9/32

(54) **Procédé de contrôle d'accès par code à un service d'échanges de données**

(30) Priorité: 16.12.2010 FR 1060605
(71) Demandeur: France Telecom, 75015 Paris (FR)
(72) Inventeur: Guillard, Michel, 94230 CACHAN (FR); Bonny, Laurent, 92140 CLAMART (FR)

(57) **Abrégé**

L'invention concerne un procédé de contrôle d'accès par code à un service caractérisé en ce que lorsque l'accès au service d'un utilisateur est verrouillé (111), pour déverrouiller l'accès au service (100), le procédé comprend des étapes itératives de réception (201) d'un code d'accès valide de l'utilisateur, jusqu'à atteindre un nombre d'itérations prédéterminé (205). L'invention concerne aussi un dispositif comprenant des moyens permettant la mise en oeuvre du procédé selon l'invention.

## Description

### Domaine de l'invention

L'invention se situe dans le domaine du contrôle d'accès par code à des services d'échanges de données.

### Art antérieur

De nombreux services utilisent un contrôle d'accès par code. De tels services peuvent par exemple être des services de téléphonie permettant la gestion de renvoi d'appels, la consultation de messagerie vocale, l'établissement de communication au travers du PABX (pour Private Branch eXchange en anglais) d'une entreprise pour effectuer des appels sur le compte de l'entreprise. Un PABX désigne un commutateur téléphonique privé généralement placé dans une entreprise, et permettant le routage des appels depuis et vers les terminaux d'une entreprise.

D'autres services peuvent également être par exemple des services de consultations de données bancaires, de passage d'ordre de virements ou de transactions boursières.

L'accès à ces services peut se faire par l'intermédiaire d'un terminal et d'un serveur vocal relié par un réseau de téléphonie ou par l'intermédiaire d'un terminal connecté à un serveur distant et relié par un réseau IP (pour Internet Protocol en anglais).

En général, le code utilisé pour le contrôle d'accès à un service est court et composé de quatre à six chiffres. Il est alors aisé pour un fraudeur de tester toutes les combinaisons de chiffres possibles, comprises entre 0000 et 9999 pour un code à quatre chiffres par exemple, pour tenter de trouver le code d'accès au service d'un utilisateur. A l'aide d'un automate, un fraudeur peut ainsi trouver le code d'accès d'un utilisateur et accéder au service.

Une première technique pour lutter contre cette technique d'intrusion du service consiste à verrouiller l'accès au service lorsque trois codes incorrects ont été composés par un utilisateur ou un fraudeur pour accéder au service. Ce procédé est par exemple utilisé pour sécuriser l'utilisation de cartes bancaires ou l'accès à des services de messagerie vocale.

Cette technique peut être contournée facilement par un fraudeur en étalant ses tentatives pour trouver le code sur une période de temps.

De plus, cette technique de verrouillage d'accès n'est efficace que si les trois codes incorrects sont composés successivement. Si entre deux tentatives de codes incorrects, un code d'accès au service est composé par l'utilisateur, le compteur de codes incorrects est remis à zéro.

Un autre inconvénient à cette technique est que lorsque l'accès au service est verrouillé, l'utilisateur doit faire appel à un administrateur du service pour demander le déverrouillage de son accès ou à sa banque pour obtenir une autre carte bancaire.

Une autre technique est par exemple celle du contrôle d'accès de la carte SIM (pour Subscriber Identity Module en anglais) utilisée dans les téléphones portables. L'accès au téléphone portable est verrouillé lorsque trois codes incorrects ont été composés pour accéder au téléphone. Le déverrouillage peut être obtenu à l'aide d'un code PUK (pour Personal Unblocking Key) composé par l'utilisateur sur son téléphone portable. L'obtention de ce code PUK n'est pas facile pour l'utilisateur qui doit faire appel au service client de l'opérateur de téléphonie mobile.

Pour d'autres services qui utilisent un code de déverrouillage du service en cas d'accès verrouillé, le code de déverrouillage est souvent un code unique défini par un administrateur et connu de nombreuses personnes s'il n'est pas changé régulièrement. De plus, ce code de déverrouillage est souvent commun à tous les utilisateurs.

Une autre technique consiste à informer l'utilisateur lors de son accès au service sur la dernière fois qu'il y a accédé. Cette technique ne verrouille pas l'accès au service lors de tentatives de fraude et fournit seulement l'information à l'utilisateur que son accès au service a été fraudé.

### Inconvénient de l'art antérieur

Les techniques de l'art antérieur offrent une sécurisation limitée de l'accès à des services tant que l'accès n'est pas verrouillé.

De plus, elles n'autorisent pas un déverrouillage simple de l'accès par code à un service pour un utilisateur. Par exemple, si un utilisateur a verrouillé lui-même son accès à cause d'un oubli de son code et de plusieurs tentatives de le retrouver ou si son accès a été verrouillé à cause de tentatives frauduleuses d'accès, l'utilisateur n'a pas la possibilité de déverrouiller lui-même son accès. Il doit faire appel à un administrateur ou au service client du service.

### Exposé de l'invention

Un des buts de l'invention est d'apporter des améliorations par rapport à l'état de la technique.

Elle propose à cet effet un procédé de contrôle d'accès par code à un service caractérisé en ce que pour accéder au service ou lorsque l'accès au service d'un utilisateur est verrouillé, pour déverrouiller l'accès au service, le procédé comprend des étapes itératives de réception d'un code d'accès valide de l'utilisateur, jusqu'à atteindre un nombre d'itérations prédéterminé.

Ainsi, lorsque l'accès au service d'un utilisateur n'est pas verrouillé, cet accès est sécurisé face aux tentatives frauduleuses mises en oeuvre par un automate pour tenter de trouver le code d'accès valide de l'utilisateur.

De plus, lorsque l'accès au service d'un utilisateur a été verrouillé à cause de tentatives frauduleuses, l'accès de l'utilisateur peut être déverrouillé par l'utilisateur lui-même en envoyant le code d'accès valide. L'envoi itératif du code d'accès valide permet d'empêcher un utilisateur fraudeur de trouver le code d'accès valide. En effet, pour l'utilisateur fraudeur qui envoie un code d'accès, même valide, le procédé nécessite la confirmation du code d'accès valide par des envois répétés du code d'accès valide. Ainsi, un fraudeur ne connaissant pas le code d'accès valide, même s'il compose le code d'accès valide lors de ses tentatives, ne découvrira pas que le code composé correspond au code d'accès valide car sa demande d'accès sera rejetée comme s'il avait composé un code incorrect.

Seul l'utilisateur connaissant son code d'accès valide, pourra accéder au service ou déverrouiller son accès au service en envoyant le code d'accès valide selon un nombre d'itérations prédéterminé. Ce nombre d'itérations prédéterminé peut prendre une valeur fixe, par exemple 5, ou une valeur variable fixée par le dispositif mettant en oeuvre le procédé au moment du passage de l'état déverrouillé à l'état verrouillé de l'accès au service.

Le déverrouillage de l'accès du service ne nécessite par l'intervention d'une personne administratrice du service ou l'utilisation d'un code différent du code d'accès valide au service.

Les différents modes ou caractéristiques de réalisation mentionnés ci-après peuvent être ajoutés indépendamment ou en combinaison les uns avec les autres, aux étapes du procédé défini ci-dessus.

Selon un mode particulier de réalisation de l'invention, le procédé de contrôle est également caractérisé en ce que pour déverrouiller l'accès au service, au moins une itération de réception du code d'accès valide de l'utilisateur est valide si la au moins une itération de réception est effectuée dans un intervalle de temps prédéterminé.

Une information sur l'intervalle de temps prédéterminé peut par exemple être affichée sur l'écran du terminal de l'utilisateur ou signalée de manière sonore à l'utilisateur par l'écouteur de son terminal.

Ainsi, si par exemple un utilisateur fraudeur utilise un automate envoyant plusieurs itérations de chaque combinaison possible de chiffres pour trouver le code d'accès valide, au moins une itération de réception du code d'accès valide doit être effectuée dans l'intervalle de temps prédéterminé affiché ou annoncé. L'automate ne pourra pas avoir accès à cette information.

Selon un mode particulier de réalisation de l'invention, le procédé de contrôle est également caractérisé en ce que pour déverrouiller l'accès au service, le procédé comprend une étape d'affichage d'une fenêtre de composition sur un terminal pendant un intervalle de temps prédéterminé, le code d'accès valide de l'utilisateur reçu lors d'au moins une itération de réception étant composé dans la fenêtre de composition.

Ainsi, la fenêtre de composition dans laquelle l'utilisateur doit composer son code d'accès valide n'apparaît que temporairement à l'écran de l'utilisateur. Ceci permet de sécuriser la composition du code d'accès valide contre les tentatives frauduleuses mises en oeuvre par un automate.

Selon un mode particulier de réalisation de l'invention, le procédé de contrôle est également caractérisé en ce que pour déverrouiller l'accès au service, le procédé comprend une étape de signalisation d'un intervalle de temps prédéterminé, pendant lequel le code d'accès valide de l'utilisateur reçu lors d'au moins une itération de réception doit être composé.

Par exemple, la signalisation de l'intervalle de temps prédéterminé peut être faite par l'émission de bips sonores pendant la durée de l'intervalle de temps. L'utilisateur est ainsi averti de manière sonore du début et de la fin de l'intervalle de temps pendant lequel il doit composer son code d'accès valide.

Selon un mode particulier de réalisation de l'invention, l'accès au service d'un utilisateur est verrouillé lorsqu'un compteur du nombre de codes incorrects composés pour accéder au service atteint un nombre prédéterminé, le procédé de contrôle est alors aussi caractérisé en ce que le compteur du nombre de codes incorrects n'est pas remis à zéro lorsque le code d'accès valide de l'utilisateur est reçu.

Ainsi, l'accès au service est sécurisé contre les tentatives d'accès frauduleuses qui testent des codes d'accès pour trouver le code d'accès valide entre deux accès au service par l'utilisateur.

Selon un mode particulier de réalisation de l'invention, le procédé de contrôle est aussi caractérisé en ce qu'il comporte une étape d'information sur le nombre de codes incorrects reçus. Ainsi, un utilisateur a la connaissance de tentatives frauduleuses d'accès au service utilisant son propre accès au service.

L'invention concerne également un dispositif de contrôle d'accès par code à un service caractérisé en ce qu'il comprend des moyens de réception d'un code d'accès valide d'un utilisateur, des moyens de comptage du nombre de codes d'accès valides de l'utilisateur reçus, et des moyens de déverrouillage de l'accès au service de l'utilisateur mis en oeuvre lorsque le nombre de codes d'accès valides de l'utilisateur reçus est égal à un nombre prédéterminé.

Le dispositif permet ainsi de déverrouiller l'accès au service d'un utilisateur sans l'assistance d'une personne administratrice du service.

Les différents modes ou caractéristiques de réalisation mentionnés ci-après peuvent être ajoutés indépendamment ou en combinaison les uns avec les autres, aux caractéristiques du dispositif défini ci-dessus.

Selon un mode particulier de réalisation de l'invention, le dispositif de contrôle comporte en outre une interface affichant sur un terminal une fenêtre de composition pendant un intervalle de temps prédéterminé, pendant lequel le code d'accès valide de l'utilisateur doit être composé. Ainsi, la fenêtre de composition apparaît temporairement à l'écran du terminal de l'utilisateur, ce qui permet de lutter contre les tentatives d'accès frauduleuses mises en oeuvre par des automates.

Selon un mode particulier de réalisation de l'invention, le dispositif de contrôle comporte en outre une interface signalant au moins une information de temps correspondant à un intervalle de temps pendant lequel le code d'accès valide de l'utilisateur doit être composé.

Selon le type de terminal utilisé par l'utilisateur pour accéder au service, l'interface peut afficher sur l'écran du terminal de l'utilisateur l'information de temps si par exemple l'utilisateur utilise un ordinateur ou un terminal disposant d'un écran.

Selon un autre mode de réalisation de l'invention, l'interface peut annoncer vocalement, par l'écouteur du terminal de l'utilisateur l'information de temps, par exemple si l'utilisateur utilise un téléphone pour accéder au service.

Selon un autre mode de réalisation de l'invention, l'interface peut signaler à l'utilisateur l'information de temps par l'émission de bips sonore dans l'écouteur du terminal de l'utilisateur.

Ainsi, un automate mettant en oeuvre des tentatives d'accès frauduleuses n'aura pas accès à cette information de temps.

Selon un mode particulier de réalisation de l'invention, le dispositif de contrôle comprend également des moyens de comptage du nombre de codes incorrects reçus et comporte une interface annonçant une information sur le nombre de codes incorrects reçus.

Selon le type de terminal utilisé par l'utilisateur pour accéder au service, l'interface peut afficher sur l'écran du terminal l'information sur le nombre de codes incorrects reçus.

L'interface peut aussi annoncer vocalement à l'utilisateur par l'écouteur de son terminal l'information sur le nombre de codes incorrects reçus. L'interface peut aussi émettre des bips sonores par l'écouteur du terminal correspondant au nombre de codes incorrects reçus.

Ainsi, un utilisateur a la connaissance de tentatives frauduleuses d'accès au service utilisant son propre accès au service.

L'invention concerne aussi un serveur de contrôle d'accès par code à un service comprenant un dispositif selon l'invention. Ainsi, l'invention peut par exemple être mise en oeuvre dans un serveur de messagerie.

L'invention concerne aussi un terminal utilisé pour l'accès par code à un service comprenant un dispositif selon l'invention. L'invention peut ainsi être mise en oeuvre par le terminal de l'utilisateur, par exemple un téléphone mobile.

L'invention concerne également un programme d'ordinateur comportant des instructions pour l'exécution du procédé de contrôle d'accès par code à un service selon l'invention lorsque ledit programme est exécuté par un processeur.

L'invention concerne également un support d'information lisible par un ordinateur, et comportant des instructions d'un programme d'ordinateur tel que mentionné ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 présente des étapes du procédé de contrôle d'accès selon l'invention dans le cas d'un accès non verrouillé,
- la figure 2 présente des étapes du procédé de contrôle d'accès selon l'invention dans le cas d'un accès verrouillé,
- la figure 3 illustre un mode particulier de réalisation de l'invention,
- la figure 4 illustre la structure du dispositif de contrôle d'accès selon l'invention.

### Description d'un mode particulier de réalisation de l'invention

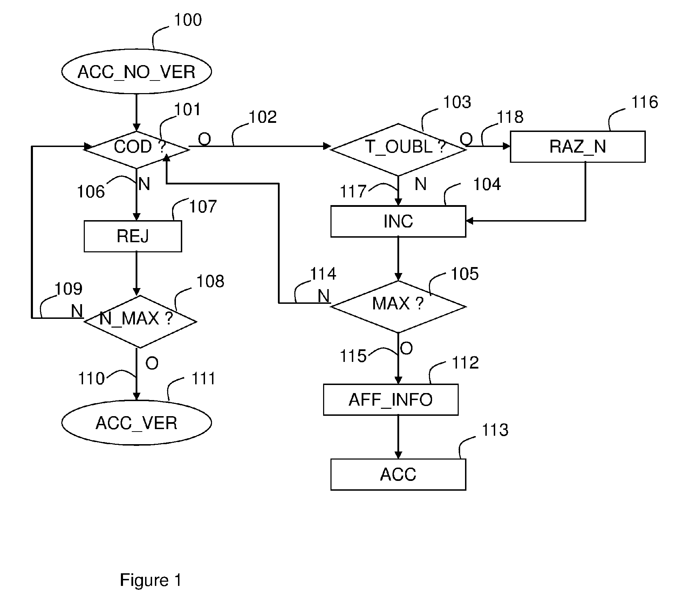

La figure 1 présente des étapes du procédé de contrôle d'accès selon l'invention dans le cas d'un accès non verrouillé (étape 100).

Un utilisateur souhaite par exemple accéder à un service d'échanges de données tels que par exemple un service de messagerie téléphonique. Ce service de messagerie téléphonique lui permet par exemple de consulter sa messagerie vocale, d'émettre des appels téléphoniques sur le compte de son entreprise par l'intermédiaire d'un PABX de son entreprise. Le service d'échanges de données peut également être un service de transactions financières.

Dans une première étape 101, le procédé est en attente de la réception d'un code d'accès composé par un utilisateur. L'utilisateur compose ce code d'accès pour s'authentifier auprès du service auquel il souhaite accéder ou bien pour valider les données d"identification qui ont été préalablement envoyées au dispositif. Ces données d'identification peuvent par exemple être son nom, son adresse de messagerie électronique, son numéro de sécurité sociale, son numéro de téléphone, son numéro de client du service. Ces données d'identification peuvent également être par exemple enregistrées sur un support physique et non lisible par un personne mais interprétable par un terminal apte à lire le support physique. Le support physique peut par exemple être une carte à puce électronique.

Si le code d'accès reçu n'est pas valide (N en 106), l'accès au service est rejeté lors d'une étape 107. Le procédé incrémente alors de 1 un compteur du nombre de codes incorrects pour l'accès de l'utilisateur. Le procédé vérifie dans une étape 108, si le compteur du nombre de codes incorrects atteint un nombre prédéterminé appelé nb_code_incorrect_maximum, par exemple 3. Si le compteur du nombre de codes incorrects atteint nb_code_incorrect_maximum (O en 110), l'accès au service est verrouillé à l'étape 111.

Si le compteur du nombre de codes incorrects est inférieur à nb_code_maximum (N en 109), le procédé retourne à l'étape 101 d'attente de code.

Si le code d'accès reçu est valide (O en 102), l'utilisateur va pouvoir accéder au service lors d'une étape 113. Le code d'accès valide est un code privé dont seul l'utilisateur a la connaissance. Contrairement au système de contrôle d'accès par code de l'art antérieur, lors de la réception d'un code d'accès valide de l'utilisateur (O en 102), le procédé selon l'invention ne remet pas à 0 le compteur de nombre de codes incorrects.

Le compteur de nombre de codes incorrects peut être remis à 0 lors d'une étape 116 si un délai d'oubli dans le temps depuis le dernier code incorrect reçu est passé, ce délai peut par exemple être fixé à 3 semaines. La vérification de delai d'oubli dans le temps est effectué dans une étape 103 facultative, si cette vérification est positive (O en 118), le compteur de nombre de codes incorrects est remis à 0 lors de l'étape 116.

Lorsque le code d'accès reçu est valide (O en 102), un compteur de nombre de codes valides nb_code_valide est incrémenté de 1 lors d'une étape 104. Dans une étape 105, le procédé vérifie si le compteur de nombre de codes valides nb_code_valide atteint un nombre prédéterminé appelé nb_code_valide_maximum_dever. Ce paramètre nb_code_valide_maximum_dever peut par exemple prendre la valeur 3.

Si le compteur de nombre de codes valides n'atteint pas la valeur du nombre nb_code_valide_maximum_dever (N en 114), le procédé retourne à l'étape 101 d'attente de code d"accès.

Si le compteur de nombre de codes valides atteint la valeur du nombre nb_code_valide_maximum_dever (O en 115), lors d'une étape 112, le procédé affiche sur le terminal utilisé par l'utilisateur une information sur le nombre de codes incorrects reçus depuis la dernière utilisation du service. Cette information peut être envoyée à la personne administratrice du service afin de l'informer des tentatives frauduleuses d'accès au service.

Selon un autre mode de réalisation de l'invention, lors de l'étape 112, le procédé annonce vocalement par l'écouteur du terminal de l'utilisateur une information sur le nombre de codes incorrects reçus depuis la dernière utilisation du service.

Selon un autre mode de réalisation de l'invention, cette information peut également être transmise à l'utilisateur sous forme de bips sonores, le nombre de bips correspondant au nombre de tentatives frauduleuses d'accès au service.

L'utilisateur peut ensuite accéder au service lors d'une étape 113. Dans cette étape, le compteur de nombre de codes valides nb_code_valide est remis à 0.

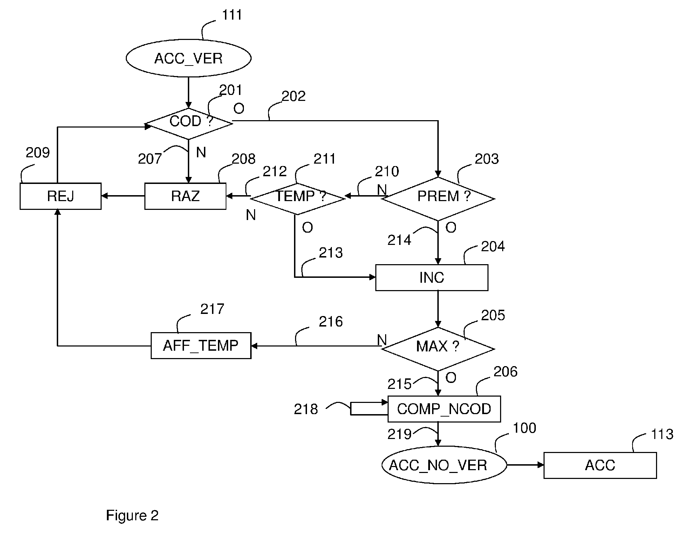

La figure 2 présente des étapes du procédé de contrôle d'accès selon l'invention dans le cas d'un accès verrouillé (étape 111) de l'utilisateur. Lorsque l'accès de l'utilisateur au service a été verrouillé à l'étape 111, le compteur de nombre de codes valides nb_code_valide a été initialisé à 0. Ce compteur de nombre de codes valides sera utilisé ensuite par le procédé pour déverrouiller l'accès au service de l'utilisateur.

Lors d'une étape 201, le procédé attend la réception d'un code d'accès composé par l'utilisateur. Si le code d'accès reçu est valide (O en 202), le procédé vérifie lors d'une étape 203 si le compteur de nombre de codes valides est à 0. Si le compteur de nombre de codes valides est à 0 (O en 214), ce compteur est incrémenté de 1 lors d'une étape 204.

Lors d'une étape 205, le procédé vérifie si le compteur de codes valides atteint un nombre prédéterminé appelé nb_codes_valides_maximum_ver, dont la valeur peut par exemple être 5.

Selon le mode de réalisation, le nombre maximum de nombre de codes valides reçus peut avoir la même valeur dans le cas de l'accès verrouillé et dans le cas de l'accès déverrouillé. Le nombre maximum de nombre de codes valides reçus peut aussi prendre une valeur différente selon que l'accès est verrouillé ou non.

Si le compteur de codes valides est inférieur à nb_codes_valides_maximum_ver (N en 216), l'étape 217 du procédé informe l'utilisateur sur l'intervalle de temps pendant lequel le prochain code vaide devra être reçu, puis l'accès au service est rejeté lors d'une étape 209 et le procédé retourne à l'étape 201 d'attente de réception de codes d'accès.

Si lors de l'étape 203 le procédé vérifie (O en 210) que le compteur de codes valides n'est pas à 0, alors le procédé vérifie dans une étape 211 facultative si le code valide a été reçu dans un intervalle de temps prédéterminé. Le procédé vérifie ainsi si le code valide n'a pas été reçu dans un délai trop long par rapport au dernier code valide reçu. Dans le cas d'un accès verrouillé, le délai maximal pour recevoir un code valide après un précédent code valide peut par exemple être 10 minutes. Un délai minimum peut aussi être utilisé, par exemple 10 secondes. Les informations de délai pour composer le code valide suivant peuvent être affichées à l'écran du terminal de l'utilisateur lors de l'étape 217.

Selon un autre mode de réalisation de l'invention, lors de l'étape 217, les informations de délai pour composer le code valide peuvent être annoncées vocalement à l'utilisateur.

Selon un autre mode de réalisation de l'invention, lors de l'étape 217, l'intervalle de temps pendant lequel le code valide doit être composé peut être signalé à l'utilisateur par l'émission de bips sonores pendant la durée de l'intervalle de temps.

Ces étapes permettent de lutter contre les techniques de fraudes qui utilisent des automates pour composer toutes les combinaisons de chiffres possibles afin de trouver le code d'accès valide. L'étape 217 n'a pas lieu d'être si l'étape 211 facultative de validation de la réception d'un code valide dans un intervalle de temps prédéterminé n'est pas effectuée par le procédé.

Si le procédé vérifie que le code valide a été reçu dans l'intervalle de temps prédéterminé (O en 213), le compteur de nombre de codes valides est incrémenté de 1 lors d'une étape 204.

Sinon, le code valide n'ayant pas été reçu dans l'intervalle de temps prédéterminé (N en 212), le compteur de nombre de codes valides est remis à 0 à l'étape 208, l'accès au service est ensuite rejeté à l'étape 209 et le procédé retourne à l'étape 201 d'attente de réception de codes d'accès.

A l'étape 205 de vérification si le compteur de codes valides atteint le nombre nb_codes_valides_maximum_ver, si le compteur de codes valides atteint ce nombre (O en 215), le procédé affiche lors d'une étape 206 facultative à l'écran du terminal de l'utilisateur un code ou une expression à composer par l'utilisateur. Cette étape 206 peut autrement consister à annoncer à l'utilisateur un code à composer sur son terminal.

Si l'utilisateur ne compose pas correctement le code annoncé, le procédé retourne par l'étape 218 à l'étape 206. Si l'utilisateur compose correctement le code annoncé, le procédé va par l'étape 219 à l'étape 100 d'accès déverrouillé.

L'utilisateur accède ensuite au service à l'étape 113.

Si le code reçu lors de l'étape 201 n'est pas un code d'accès valide (N en 207), le procédé va remettre à 0 le compteur de codes valides dans une étape 208, puis l'accès au service est rejeté dans une étape 209 et le procédé retourne à l'étape 201 d'attente de réception de code d'accès. Selon le mode de réalisation, le procédé présenté en figure 1 et le procédé présenté en figure 2 peuvent être mis en oeuvre indépendamment ou bien ensemble.

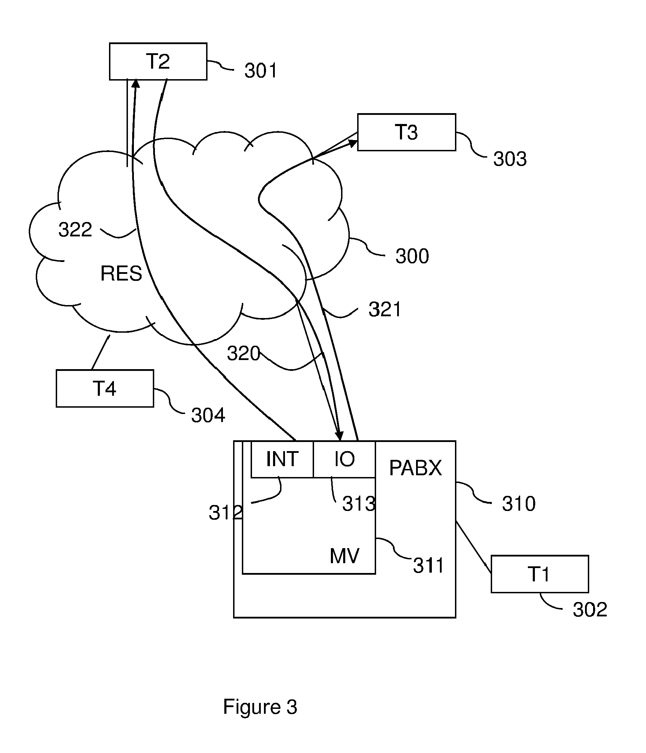

La figure 3 illustre un mode particulier de réalisation de l'invention.

Un réseau de télécommunication fixe ou mobile 300 est représenté, ainsi qu'une entité de communication PABX 310. Un utilisateur possède un terminal 302 connecté au PABX 310 et une messagerie vocale évoluée dans le serveur de messagerie 311, ce serveur de messagerie 311 est intégré au PABX 310. Le terminal 302 peut par exemple être un terminal d'entreprise.

Lorsque l'utilisateur est en dehors de l'entreprise, en situation de travail en mode nomadisme par exemple, il peut utiliser un terminal 301 connecté au réseau fixe ou mobile 300 par exemple pour effectuer des communications sur le compte de son entreprise. Par exemple, l'utilisateur émet une communication téléphonique vers sa messagerie vocale située dans le serveur de messagerie 311. Pour s'identifier auprès du serveur de messagerie, l'utilisateur compose sur le terminal 301 un identifiant et un code d'accès privé, connu de lui seul. Si le code d'accès n'est pas valide, l'utilisateur dispose de trois tentatives de composition du code d'accès avant que son accès soit verrouillé. Le code d'accès composé sur le terminal est ensuite envoyé au serveur de messagerie 311. Le serveur de messagerie 311 reçoit le code d'accès grâce à ses ports de réception 313.

Le procédé selon l'invention décrit à la figure 1 est alors mis en oeuvre par le serveur de messagerie 311.

Si le code d'accès composé par l'utilisateur est valide, l'utilisateur accède au service proposé par le serveur de messagerie 311. Le serveur de messagerie 311 affiche à l'utilisateur par l'intermédiaire de son interface 312 et du terminal 301 une information 322 sur le nombre de codes incorrects qui ont été reçu par le serveur de messagerie 311 depuis la précédente utilisation du service par l'utilisateur.

Selon un autre mode de réalisation de l'invention, l'interface 312 envoie un signal vocal portant l'information 322 sur le nombre de codes incorrects qui ont été reçu.

Selon un autre mode de réalisation de l'invention, l'interface 312 émet des bips sonores vers le terminal 301 de l'utilisateur, le nombre de bips sonores correspondant au nombre de codes incorrects qui ont été reçu

Lors de son accès au service, l'utilisateur peut par exemple émettre une communication 321 vers un terminal 303 connecté au réseau 300, la communication 321 étant prise en charge sur le compte de l'entreprise de l'utilisateur.

Si un utilisateur fraudeur tente de se connecter au serveur de messagerie 311 en utilisant l'identifiant de l'utilisateur par exemple, l'utilisateur fraudeur envoie une succession de codes d'accès pour trouver le code d'accès valide de l'utilisateur à partir par exemple d'un terminal 304 connecté au réseau 300. Tant que l'accès de l'utilisateur est dans un état déverrouillé, le procédé selon l'invention décrit par la figure 1 est mis en oeuvre par le serveur de messagerie 311.

Lorsque l'accès de l'utilisateur est dans l'état verrouillé, par exemple après que le serveur de messagerie ait reçu trois codes incorrects envoyés par l'utilisateur fraudeur, le procédé selon l'invention décrit à la figure 2 est mis en oeuvre par le serveur de messagerie 311.

Le procédé selon l'invention permet de contrôler l'accès de l'utilisateur face à des tentatives d'accès émises par un utilisateur fraudeur.

Lorsque l'utilisateur envoie son code d'accès valide au serveur de messagerie 311 et que son accès est verrouillé, le procédé selon l'invention décrit à la figure 2 est mis en oeuvre par le serveur de messagerie 311. L'utilisateur, seul à connaitre le code d'accès valide, peut ainsi déverrouiller son accès au service sans que son code d'accès valide ait été découvert par l'utilisateur fraudeur.

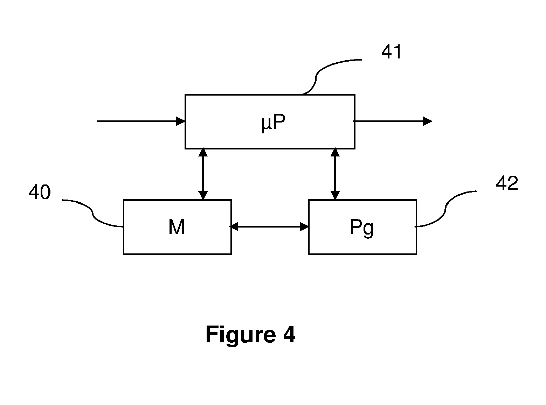

La figure 4 illustre la structure du dispositif de contrôle d'accès selon l'invention. Le dispositif selon l'invention comprend une mémoire 40 comprenant une mémoire tampon, une unité de traitement 41, équipée par exemple d'un microprocesseur µP, et pilotée par le programme d'ordinateur 42, mettant en oeuvre le procédé de contrôle d'accès selon l'invention.

A l'initialisation, les instructions de code du programme d'ordinateur 42 sont par exemple chargées dans une mémoire RAM avant d'être exécutées par le processeur de l'unité de traitement 41. Le microprocesseur de l'unité de traitement 41 met en oeuvre les étapes du procédé de contrôle d'accès selon l'invention décrit précédemment et notamment les étapes itératives de réception d'un code d'accès, de validation du code d'accès, de validation de la réception d'un code d'accès valide dans un intervalle de temps prédéterminé, d'affichage d'une fenêtre de composition sur un terminal pendant un intervalle de temps prédéterminé, et d'information sur le nombre de codes incorrects reçus, selon les instructions du programme d'ordinateur 42.

Pour cela, le dispositif comprend, outre la mémoire tampon 40, des moyens de réception d'un code d'accès valide d'un utilisateur, des moyens de comptage du nombre de codes d'accès valides de l'utilisateur reçus, des moyens de déverrouillage de l'accès au service de l'utilisateur.

Selon un autre mode de réalisation de l'invention, le dispositif comprend également une interface affichant sur un terminal une fenêtre de composition pendant un intervalle de temps prédéterminé. Selon un autre mode de réalisation de l'invention, le dispositif comprend également une interface annonçant au moins une information de temps correspondant à un intervalle de temps pendant lequel le code d'accès valide de l'utilisateur doit être composé.

Selon un autre mode de réalisation de l'invention, le dispositif comprend également des moyens de comptage du nombre de codes incorrects reçus et une interface annonçant une information sur le nombre de codes incorrects reçus.

Ces moyens sont pilotés par le microprocesseur de l'unité de traitement 41.

## Revendications

1. Procédé de contrôle d'accès par code à un service **caractérisé en ce que** pour accéder au service ou lorsque l'accès au service d'un utilisateur est verrouillé (111), pour déverrouiller l'accès au service (100), le procédé comprend des étapes itératives de réception (201) d'un code d'accès valide de l'utilisateur, jusqu'à atteindre un nombre d'itérations prédéterminé (205).

2. Procédé de contrôle selon la revendication 1 **caractérisé en ce que** pour déverrouiller l'accès au service, au moins une itération de réception du code d'accès valide de l'utilisateur est valide si la au moins une itération de réception est effectuée (211) dans un intervalle de temps prédéterminé.

3. Procédé de contrôle selon la revendication 2 **caractérisé en ce que** pour déverrouiller l'accès au service, le procédé comprend une étape d'affichage d'une fenêtre de composition sur un terminal pendant un intervalle de temps prédéterminé, le code d'accès valide de l'utilisateur reçu lors d'au moins une itération de réception étant composé dans la fenêtre de composition.

4. Procédé de contrôle selon la revendication 2 **caractérisé en ce que** pour déverrouiller l'accès au service, le procédé comprend une étape de signalisation d'un intervalle de temps prédéterminé, pendant lequel le code d'accès valide de l'utilisateur reçu lors d'au moins une itération de réception doit être composé.

5. Procédé de contrôle selon la revendication 1, l'accès au service d'un utilisateur étant verrouillé lorsqu'un compteur du nombre de codes incorrects composés pour accéder au service atteint un nombre prédéterminé, le procédé est **caractérisé en ce que** le compteur du nombre de codes incorrects n'est pas remis à zéro lorsque le code d'accès valide de l'utilisateur est reçu.

6. Procédé de contrôle selon la revendication 5 **caractérisé en ce qu'**il comporte une étape d'information sur le nombre de codes incorrects reçus (104).

7. Dispositif de contrôle d'accès (311) par code à un service **caractérisé en ce qu'**il comprend des moyens de réception (313) d'un code d'accès valide d'un utilisateur, des moyens de comptage du nombre de codes d'accès valides de l'utilisateur reçus, et des moyens de déverrouillage de l'accès au service de l'utilisateur mis en oeuvre lorsque le nombre de codes d'accès valides de l'utilisateur reçus est égal à un nombre prédéterminé.

8. Dispositif de contrôle (311) selon la revendication 7 **caractérisé en ce qu'**il comporte une interface (312) affichant sur un terminal une fenêtre de composition pendant un intervalle de temps prédéterminé, pendant lequel le code d'accès valide de l'utilisateur doit être composé.

9. Dispositif de contrôle (311 )selon la revendication 7 **caractérisé en ce qu'**il comporte une interface (312) signalant au moins une information de temps correspondant à un intervalle de temps pendant lequel le code d'accès valide de l'utilisateur doit être composé.

10. Dispositif de contrôle (311) selon la revendication 7 **caractérisé en ce qu'**il comprend des moyens de comptage du nombre de codes incorrects reçus et **en ce qu'**il comporte une interface (312) annonçant une information sur le nombre de codes incorrects reçus.

11. Serveur de contrôle d'accès par code à un service **caractérisé en ce qu'**il comprend un dispositif selon l'une quelconque des revendications 7 à 10.

12. Terminal utilisé pour l'accès par code à un service **caractérisé en ce qu'**il comprend un dispositif selon l'une quelconque des revendications 7 à 10.

13. Programme d'ordinateur comportant des instructions pour l'exécution du procédé de contrôle d'accès par code à un service selon l'une quelconque des revendications 1 à 6 lorsque ledit programme est exécuté par un processeur.
